# EUROPEAN PATENT APPLICATION

(11) **EP 4 353 783 A1**
(43) Date of publication of application: **17.04.2024**
(21) Application number: 22382971.4
(22) Date of filing: 13.10.2022
(51) Int. Cl.: C09B 49/00, D06M 23/00, D06P 1/30, C08J 11/10

(54) **NEW SULFUR DYES FOR TEXTILE AND PAPER DYEING BASED ON RECYCLED MATERIAL**

(71) Applicant: Archroma IP GmbH, 4153 Reinach (CH)
(72) Inventor: DOMINGO FARRÉ, Manuel José, 08025 Barcelona (ES); LLORT COLELL, Albert, 08243 Manresa (Barcelona) (ES)
(74) Representative: Wallinger Ricker Schlotter Tostmann

(57) **Abstract**

Process for manufacturing a new recycled range of sulfur dye for textile and paper treatment, in which pre-consumer textiles and/or post-consumer textiles, as for example everyday clothes, working or safety clothes, household textiles as carpets, bedding, curtains etc. can be used as raw material and is transformed into soluble dyes. Said dyes possess typical sulfur dye behavior and are capable to dye textile fibers, preferably cellulose fibers or interact in a synergetic way with other sulfur dyes improving their characteristics, preferably in the application over cellulose fibers and derivatives, as cotton, viscose, paper, Tencel, with high strength and fast color properties.

## Description

### FIELD OF THE INVENTION

The present invention relates to the field of sustainable sulfur dyes obtained from recycled textile and a process for manufacturing same from pre-consumer textiles and/or post-consumer textiles as a raw material for the process.

### BACKGROUND OF THE INVENTION

Sulfur dyes are commonly known for dyeing textile cellulosic materials or blends of cellulosic fibers with synthetic fibers. The range of colors covers black, blue, olive, and brown, but the hues are dull compared with other dye classes.

The first sulfur dyes were produced in 1873 by heating organic cellulose-containing material, such as wood sawdust, humus, bran, cotton waste, and wastepaper with alkali sulfides and polysulfide (Brit. Pat. 1489; E. Croissant and L.M.F. Bretonniere, Bull.Soc. Ind. Mulhouse 44, 465 (1874)). These dyes were described as black and hygroscopic, had a bad color and odor and were toxic.

Today, it is well-known that a group of colors, as some browns, olives, greys, oranges and yellows can be obtained by mixing sulfur, sulfides and/or polysulfides with different well defined organic aromatic compounds and reacting these mixtures at high temperatures. Theses raw materials come from different benzene derivatives, the most important being: amino compounds such as m-phenylenediamine, m-toluenediamine, p-toluidine, aniline, p-phenylenediamine; amino-nitro compounds such as p-nitroaniline, amino-nitrotoluene; phenol compounds such as beta-naphthol, p-aminophenol, hydroquinone.

The present invention focuses on sustainable educts for the sulfur dye manufacturing like pre-consumer textiles and/or post-consumer textiles as raw material for the production, which significantly impacts the environmental footprint of the method since it can be considered a treatment method for waste simultaneously.

The amount of waste from consumer textiles continuously raised in the years 2013 to 2015 by around 14 kg per person per year to an absolute amount of 1.3 million tons in Germany according to a study of the bvse ("Bundesverband Sekundärrohstoffe und Entsorgung") resulting in increasing challenges for waste-treatment.

It was found that these huge amounts of waste can be recycled by using pre-consumer textiles and/or post-consumer textiles according to the present invention to produce sulfur dyes and thus, using this material for example as dye in the textile industry again, achieve a second lifetime of the textile material.

### OBJECT OF THE INVENTION

The problem to be solved by this invention is therefore to provide a process for manufacturing sustainable sulfur dyes from pre-consumer textiles and/or post-consumer textiles including a broad range materials and fabrication types.

### SUMMARY OF THE INVENTION

The object is solved by a process for manufacturing sustainable sulfur-dyes from textile material from pre-consumer textiles and/or post-consumer textiles, as for example used everyday clothes, work clothes, safety clothes, household textile as carpets, bedding, curtains and the like and other commonly used textile materials. This is advantageous since the textile materials used for the method according to the invention can be used and/or no longer useful for the original application. Hence, the present application uses as raw material compounds which can be considered as waste thus reducing the environmental impact of the present invention. Further, the present application can be considered as waste-treatment method for the textile industry.

A further advantage of the invention is, that any color of the pre-consumer and/or post-consumer textile is recycled at the same time not requiring a method of pre-sorting the textile by color.

Accordingly, the invention relates to a process for manufacturing sulfur dyes from textile material comprising the steps of: (iv) Mixing the textile material with one or more sulfurization agents selected from the group consisting of sulfur, sulfur/caustic soda, sulfide, polysulfide or a combination thereof; (v) Heating said mixture.

Further, the process according to the invention can comprise one or more of the following steps prior to step (iv): (i) Providing textile material; and/or (ii) Optionally pretreating said textile material in a non-neutral medium and/or with one or more amino or polyamino compounds, at elevated temperatures; and/or (iii) Optionally neutralizing the pretreated textile material and/or separating the pretreated textile material in form of a presscake.

Further, the process according to the invention can comprise step (vi) after step (v): (vi) Dissolving the mixture obtained in step (v) in aqueous medium and optionally removing undissolved solid particles.

Further, in the process according to the invention the textile material can be obtained from pre-consumer textiles and/or post-consumer textiles.

Further, in the process according to the invention the textile material can be selected from the group consisting of polyamide, acrylic, aramide, polyester, wool, hair, cellulosic fibers as for example cotton, linen, jute, viscose, modal or mixtures thereof.

Further, in the process according to the invention the temperature of the optional pretreatment in step (ii) can be in the range of from 40 °C to 200 °C; and/or wherein the duration of the pretreatment in step (ii) can be of from 0.5 h to 48 h.

Further, in the process according to the invention in step (ii) the amount by weight between the textile material and the non-neutral medium can be from 1 : 15 to 15 : 1. Further, in the process according to the invention in step (ii) the amino or polyamino compounds can be selected from the group consisting of monoalkylamines, monoalkylamino alcohols, ethylenediamine, propylenediamines, butylenediamines, C₅-C₁₈-alkylenediamines, urea, guanidine, dicyandiamide, di(C₁-C₄-alkylene)triamines and tri (C₁-C₄-alkylene)tetramines, or mixtures thereof; , or mixtures thereof; and/or wherein in step (ii) the non-neutral medium is a basic aqueous medium which contains a base selected from the group consisting of sodium hydroxide, potassium hydroxide, sodium carbonate, potassium carbonate, ammonia hydroxide, alkane amines such as, monoethanolamine, triethanolamine etc, or mixtures thereof; or wherein in step (ii) the non-neutral medium is an acidic aqueous medium which contains an acid selected from the group consisting of hydrochloric acid, sulfuric acid, phosphoric acid, nitric acid, formic acid, acetic acid, lactic acid, citric acid and a Lewis acid, or mixtures thereof.

Further, in the process according to the invention the relative amount by weight between the sulfurization agent and the textile material, calculated on dry weight, can be between 1:10 to 10: 1.

Further, in the process according to the invention the mixture of step (v) can be heated to a temperature in the range of from 120 to 350 °C; and/or wherein the mixture of step (v) can be heated for at least 2 h.

In addition, the invention relates to an aqueous solution of a sulfur dye prepared by the process according to the invention.

Further, the solution of a sulfur dye according to the invention can contain free sulfide in an amount of less than 5 % by weight, based on the total weight of the aqueous solution.

Further, the invention related to the use of an aqueous solution of a sulfur dye according to the invention for dyeing cellulose material or cellulose-containing material.

Further, the invention relates to a cellulose material or cellulose-containing material dyed with an aqueous sulfur dye solution according to the invention.

Further, the cellulose material or cellulose-containing material according to the invention can be a cotton textile material, and optionally wherein the cotton textile material is a Denim jeans.

### DETAILED DESCRIPTION OF THE INVENTION

The present invention relates to a process for manufacturing sulfur dyes from textile material comprising the steps of
(iv) Mixing the textile material with one or more sulfurization agents selected from the group consisting of sulfur, sulfur/caustic soda, sulfide, polysulfide or a combination thereof;
(v) Heating said mixture.

The term "textile material" refers to any material obtained from textile, e.g. from pre-consumer textiles and/or post-consumer textiles or textile waste, and refers to any material used in the textile industry including polyamide, acrylic, aramide, polyester, wool, hair, any cellulosic fibers as for example cotton, linen, jute, viscose, modal, or mixtures thereof Further, the textile material as used in the process according to the present invention is not limited to any specific fabric, and refers to any fabric art produced by the textile industry as for example batiste, brocade, canvas, chiffon, chintz, clydella, corduroy, damask, denim, Donegal, drillich, duchesse, enoa, etamin (screen cloth), chambray, fil-à-fil (end-on-end), flannel, gabardine, gauze, georgette, jacquard, jersey, crêpe, twill, loden, mesh, muslin, natté, nettle, oxford, pinpoint, pique, plissé, poplin, satin, seersucker, slubyarn, taffeta, cloth, tweed, ventile^{®}, Shirley cloth, viyelly, voile, full twist, woolen fabric, zendaline, zephyr. In particular, the textile material used in step (iv) of the process according to the invention may further be derived from waste, excessive material or rejected goods which arise during the production process of said commonly processed materials as for example from any kind of (fiber-) losses, damaging, contamination etc.

The textile material can be used in any size. Preferably, however, the textile material is used in form of small particles, e.g. within the range of from 0.001 cm to 20 cm, or from 0.01 cm to 15 cm, or from 0.1 cm to 12.5 cm, or from 1 cm to 10 cm, but are not limited to said ranges.

The term "textile waste" refers to any textile material, which cannot or no longer be used as originally intended. Sources for such textiles are for example but not limited to damaged, broken or otherwise no longer useful textiles from consumers, offcuts, remnants or rejected goods stemming from textile production (e.g. shearing, harvesting or other natural or non-natural sources), manufacturing, processing, confection or retail etc.

The textile material can be thereby shredded prior to the provision as starting material for the process. A pre-sorting by color is not required.

The term "pre-consumer textiles" refers to any textile material never used by any kind of consumer and therefore mostly includes offcuts, remnants or rejected goods from any part of the textile industry.

The term "post-consumer textiles" refers to any textile material used by any kind of consumer as for example used or broken textiles.

The method according to the invention can therefore be regarded as recycling method for textiles. The term "textile" includes for example but is not limited to everyday clothes, work clothes, safety clothes, household textiles as carpets, bedding, curtains and the like. Thereby, any commonly processed material is suitable as raw material for the process according to the invention.

The term "mixing" in step (iv) of the process according to the invention refers to a method for bringing the added sulfurization agent in sufficient contact with the textile material by any method known in the prior art, e.g. by suspending, dissolving, dispersing or other commonly known methods.

The one or more sulfurization agents used in step (iv) of the process according to the invention is selected from the group consisting of sulfur, sulfur/caustic soda, sulfide, polysulfide or a combination thereof. The term "sulfur" refers to the element sulfur and can be used in any suitable form, e.g. as sulfur powder. The term "sulfide" refers to (metal) salts containing the sulfide S²⁻ anion. Commonly known salts are for example sodium sulfide Na₂S, lithium sulfide Li₂S, or potassium sulfide K₂S. The term "polysulfide" refer to (metal) salts containing the polysulfide Sₓ²⁻ anion. Commonly known salts are for example sodium polysulfide Na₂Sₓ, lithium polysulfide Li₂Sₓ, or potassium polysulfide K₂Sₓ.

The weight ratio of sulfurization agent to the textile material in step (iv) of the process according to the invention is in the range of from 1 : 10 to 10 : 1, or from 1 : 8 to 8 : 1, or from 1 : 6 to 6 : 1, or from 1 : 6 to 10 : 1, or from 1 : 4 to 10 : 1, or from 1 : 1 to 10 : 1 calculated on dry weight.

In step (v) of the process according to the invention, the sulfurization of the textile material takes place, and thus, the sulfur dye according to the invention is produced/obtained. In step (v) of the process according to the invention, the resulting mixture from step (iv) is heated to a temperature in the range of from 120 °C to 350 °C, or from 140 °C to 330 °C, or from 160 °C to 320 °C, or from 180°C to 310 °C, or from 200 °C to 300 °C, or from 220°C to 290 °C, or from 240 °C to 280 °C.

The mixture in step (v) of the process according to the invention is heated for at least 2 h, or at least 4 h, or at least 6 h, or at least 8 h, or at least 10 h, or at least 12 h, such as from 2 h to 24 h, or from 4 h to 22 h, or from 6 h to 20 h, or from 8 h to 18 h, or from 10 h to 17 h, or from 12 h to 16 h.

Increasing the time for step (v) of the process according to the invention to more than 24 h does not negatively affect the product quality and thus would be possible.

It is possible to perform step (v) and/or step (vi) of the process according to the invention in the absence of air.

It is possible that the obtained sulfur dye is comprised in an aqueous medium.

It is possible that the water of the reaction is completely evaporated during the sulfurization reaction taking place in step (v). The thus obtained sulfur dye which is according to the invention is a solid.

The process according to the invention can further comprise one or more of steps (i) to (iii) prior to step (iv):
(i) Provision of textile material; and/or
(ii) Optionally pretreating said textile material in a non-neutral medium and/or with one or more amino or polyamino compounds, at elevated temperatures; and/or
(iii) Optionally neutralizing the pretreated textile mixture and/or separating the pretreated textile material in form of a presscake.

In step (i), the textile material can be subjected to a process to increase the reaction surface, e.g. by shredding the textile material into pieces or fibers. The pieces or fibers of said textile material may vary in a broad range of maximum diameters (Dₘₐₓ). Dₘₐₓ thereby describes the highest possible distance between two edges of a particle or a fiber Most of the particles or fibers may lie within the range of a Dₘₐₓ from 0.001 cm to 20 cm, or from 0.01 cm to 15 cm, or from 0.1 cm to 12.5 cm, or from 1 cm to 10 cm, but are not limited to said ranges. Smaller Dₘₐₓ values mean a more complete reaction but are not necessarily required by the process. Further, it is also possible that step (i) encompasses the removal of disturbing material, like buttons, zipper etc.

Step (ii) of the method according to the invention comprises an optional pretreatment step. Although said pretreatment step (ii) is recommendable, satisfactory products may be obtained without performing the optional pretreatment.

The term "non-neutral" refers a pH value not equaling 7. The term "medium" refers to the physical appearance of the liquid phase and is selected from the group consisting of a solution, dispersion or a suspension. Said medium can comprise water and one or more additives to adjust the pH value.

The pH value of the non-neutral medium can be acidic, i.e. below 6, or below 5, or below 4, or below 3, or basic, i.e. above 8, or above 9, or above 10, or above 11.

It is possible that the pH value of said non-neutral medium is below 6, or below 5, or below 4, or below 3. The one or more additives to adjust the pH value of said non-neutral medium are selected from the group consisting of hydrochloric acid, sulfuric acid, phosphoric acid, nitric acid, formic acid, acetic acid, lactic acid, citric acid and a Lewis acid, or mixtures thereof.

It is possible that the pH value of said non-neutral medium is or is above 8, or above 9, or above 10, or above 11. The one or more additives to adjust the pH value of said non-neutral medium are selected from the group consisting of sodium hydroxide, potassium hydroxide, sodium carbonate, potassium carbonate, ammonia hydroxide, alkane amines such as, monoethanolamine, triethanolamine etc, or mixtures thereof. It is preferred that the pH in pretreating step (ii) is adjusted to a pH of above 7.

In case the optional pretreatment of step (ii) of the process according to the invention is performed, the temperature of said pretreatment is in a range of from 40 °C to 200 °C, or from 50 °C to 180 °C, or from 60 °C to 160 °C, or from 70 °C to 150 °C, or from 80 °C to 140 °C, or from 90 °C to 130 °C.

In case the optional pretreatment of step (ii) of the process according to the invention is performed, the duration of said pretreatment is in the range of from 0.5 h to 48 h, or from 0.5 h to 36 h, or from 1 h to 24 h, or from 1 h to 18 h, or from 1.5 h to 12 h, or from 2 h to 8 h, or from 2 h to 6 h, or from 2 h to 4 h.

The weight ratio of textile material to the non-neutral medium in optional step (ii) of the process according to the invention is in the range of from 1 : 15 to 15 : 1, or from 1 : 12 to 12 : 1, or from 1 : 10 to 10 : 1, or from 1 : 6 to 6 : 1, or from 1 : 15 to 10 : 1, or from 1 : 15 to 8 : 1, or from 1 : 13 to 8 : 1.

In case the optional pretreatment of step (ii) of the process according to the invention is performed, optionally an amino or polyamino compound is added selected from the group consisting of monoalkylamines, monoalkylamino alcohols, ethylenediamine, propylenediamines, butylenediamines, C₅-C₁₈-alkylenediamines, urea, guanidine, dicyandiamide, di(C₁-C₄-alkylene)triamines and tri (C₁-C₄-alkylene)tetramines or mixtures thereof.

It is possible that the process according to the invention includes step (iii) of the process according to the invention after step (i) and/or step (ii), in which the pretreated textile material is neutralized to a pH of about 7. The used reactant thereby depends on the starting pH value of the solution.

In case the starting pH is above 7, a neutralization agent from the group consisting of hydrochloric acid, sulfuric acid, phosphoric acid, nitric acid, formic acid, acetic acid, lactic acid, citric acid and a Lewis acid, or mixtures thereof is used.

In the case the starting pH value is below 7, a neutralization agent selected from the group consisting of sodium hydroxide, potassium hydroxide, sodium carbonate, potassium carbonate, ammonia, alkylamines, alkanolamines, or mixtures thereof is used instead.

The textile material comprised in the mixture obtained after the neutralization step or in the mixture obtained from step (i) or step (ii) of the process according to the invention may be optionally separated. The term "separating" refers to any separation method known in the prior art, as for example by filtration, decanting, centrifuging, or mixtures thereof.

The process according to the invention can comprise step (ii) prior to step (iv).

Performing step (ii) and optionally step (iii) before step (iv) can be advantageous to the final sulfur dye, since almost all textile material provided in the beginning is transformed by the pretreatment method and the following sulfurization step into a soluble form. Further, the typical mercaptane odor is also avoided by the previously performed pretreatment methods of step (ii) and/or step (iii) of the process according to the invention. This is particularly the case if the pH is adjusted to above 7, i.e. to basic.

It is possible to conduct step (ii) and/or step (iii) of the present invention in the absence of air.

The process according to the invention can further comprise a step (vi) after step (v):
(vi) Dissolving the mixture obtained in step (v) in aqueous medium and optionally removing undissolved solid particles.

Step (vi) of the process according to the invention is a dissolution step which can be conducted subsequent to step (v) of the process according to the invention. Therefore, the obtained solid product is dissolved in an aqueous medium. Optionally said aqueous medium has a pH value above 7, or above 8, or above, 9, or above 10, or above 11, or above 12.

In one embodiment, step (vi) of the process according to the invention further comprises removing undissolved particles by a method selected from the group consisting of filtration, decantation, centrifugation or a combination thereof.

The product obtained after step (v) of the process according to the invention can be a sulfur dye ready-to-use.

It is also possible that the product obtained after step (v) of the process according to the invention needs to be further treated, as for example according to step (vi) to obtain a sulfur dye ready-to-use.

The product obtained after step (vi) of the process according to the invention is an aqueous sulfur dye solution ready-to-use.

It is also possible that the product obtained after step (vi) of the process according to the invention needs to be further treated to obtain an aqueous sulfur dye solution ready-to-use.

Further, the herein claimed invention also relates an aqueous solution comprising the sulfur dye according to the invention as produced by the process of the present invention disclosed above.

The yield of said sulfur dye obtained by the process according to the invention thereby varies in broad ranges depending on the used textile mixture. Usually, the ratio is that 1 part of textile material used in the method according to the invention results in at least 3 parts, or at least 4 parts, or at least 5 parts, or at least 6 parts, or at least 7 parts, or at least 8 parts, or at least 9 parts, or at least 10 parts, and/or up to 30, or up to 25 parts, or up to 20, or up to 15 parts of the final liquid sulfur dye according to the invention. In case the sulfur dye according to the invention, should be more diluted, then the upper limit of the yield of course increases accordingly.

The sulfur dye according to the invention comprised in said aqueous solution as produced by the process according to the invention shows typical sulfur dye behavior between the reduced form and the oxidized form.

The term "reduced form" refers to a form wherein sulfur dye compounds are in a reduced and water-soluble form. In the prior art, this form often also known as leuco form of the sulfur dye compound.

Suitable reaction conditions can be achieved by any known method in the prior art. Therefore, the reducing agent is selected from but not limited to the group consisting of sugars, such as glucose, dextrose, fructose, or hydrosulfites, sulfides, polysulfides, thiourea oxides, sodium borohydride hydroxyacetone, or mixtures thereof.

The term "oxidized form" refers to an oxidized form of the sulfur dye compounds having sulphide (-S-), disulphide (-S-S-) and polysulphide (-Sₙ-) bondings and are insoluble in water. This form possesses the color properties desired for the final application.

Suitable reagents for oxidization of the leuco form are selected from but not limited to the group comprising air, peroxides, percarbonates, persulfates, oxygen, bromates, periodates, chlorites or mixtures thereof.

The aqueous solution according to the invention comprising the sulfur dye according to the present invention is devoid of bad odor, and contains free sulfide (S²⁻ ions, HS⁻ ions and H₂S) in an amount of less than 5 % by weight, or less than 3 % by weight, or less than 2% by weight, or less than 1% by weight, or less than 0.5% by weight, or in the range of from 0.1 to 2.5 % by weight, based on the total weight of the aqueous solution.

Since the final sulfur dye according to the invention and thus, the therefrom derived aqueous solution according to the invention stems from different textile material sources the most effective dilution can vary depending on the used textile material source and the sulfurization conditions but in general it is advantageous to obtain the maximum concentrated aqueous sulfur dye solution possible. The concentration of the aqueous sulfur dye solution according to the invention obtained is in the range of from 20 % to 65 % by weight, or from 30 % to 60 % by weight, or from 40 % to 55 % by weight, based on the total weight of the solution.

In some embodiments, lower concentrations, such as 10 % to 40 % by weight, can be favored to avoid precipitation or crystallization of the aqueous solution comprising the sulfur dye.

The aqueous solution obtained after step (vi) of the process according to the invention can be used directly for dyeing application and is therefore especially suitable for continuous applications e.g. Denim for jeans, Pad-Steam, Pad-Ox, or Pad-sizing - Ox.

The low sulfide content of the aqueous sulfur dye solution according to the invention leads to a further advantage for the final dyed product which can be GOTS approved and considered non-toxic.

The sulfur dye according to the invention and the aqueous solution according to the invention comprising the sulfur dye can be used in any dyeing method known to the prior art as for example exhaust dyeing, printing, coating, Pad-Steam, Pad-Ox, Denim, Pad-sizing or Pad-sizing-ox.

The sulfur dye according to the invention obtained from the process according to the present invention can be used for dyeing cellulose material or cellulose-containing material selected from the group comprising cotton, paper, polyamide, cellulose/polyamide, viscose and cellulose derivatives as Tencel^{®} or Lyocel^{®}, linen or bamboo or mixtures thereof.

Further, cellulose materials dyed with the sulfur dye according to the invention or the aqueous solution according to the invention comprising the sulfur dye as obtained by the process according to the present invention are claimed as well.

These cellulose materials can be made from fibers, yarns, woven, fabrics, knitwear, garments, in particular for apparel or denim articles, paper, cardboard or mixtures thereof.

In one embodiment, the dyed cellulose material is a cotton textile material dyed in brown or olive shades using a sulfur dye according to the invention or an aqueous solution according to the invention comprising the sulfur dye as obtained by the process according to the invention. The dyed cellulose material can be for example a denim jeans.

### EXAMPLES

In this section, different materials obtained from pre-consumer and/or post-consumer textiles are converted into sulfur dyes according to the invention:

| **Ex1** | **Ex 2** | **Ex 3** | **Ex 4** | **Ex 5** | **Ex 6** |
|---|---|---|---|---|---|
| Polyamide | Polyacrylic | Polyester | Cotton | Polyester Cotton | Wool Hair |

### Production Examples

In a reactor water, caustic soda (50%), and the textile material and a silicone defoamer are mixed together and heated to the boiling point and boiled for 3 h.

| **Ingredient (in g)** | **Ex 1** | **Ex 2** | **Ex 3** | **Ex 4** | **Ex 5** | **Ex 6** |
|---|---|---|---|---|---|---|
| water | 400 | 480 | 700 | 250 | 430 | 200 |
| caustic soda | 20 | 45 | 40 | 40 | 40 | 40 |
| textile material | 55 | 55 | 55 | 55 | 28 / 28 | 50 |
| silicone defoamer | 1 | 1 | 1 | 1 | 1 | 1 |

Afterwards, sodium sulfide (60%), sulphur, and additional defoamer are added. The resulting mixture is heated until 265 °C and maintained at this temperature for 15 h. During the heating process, the comprised water evaporates, and the reaction mixture becomes more viscous over the time until being transformed into a solid. The generation of excessive hydrogen sulfide is observed.

| **Ingredient (in g)** | **Ex 1** | **Ex 2** | **Ex 3** | **Ex 4** | **Ex 5** | **Ex 6** |
|---|---|---|---|---|---|---|
| sodium sulfite | 150 | 85 | 200 | 110 | 120 | 70 |
| Sulphur | 150 | 95 | 150 | 100 | 95 | 85 |
| defoamer | 1 | 1 | 1 | 1 | 1 | 1 |
| product amount | 236 | 184 | 318 | 190 | 226 | 128 |

Optionally, the obtained (raw) product can be treated in an aqueous (alkaline) medium. Therefore, the obtained solid product is dissolved in water and optionally caustic soda (50%) and boiled for 1 h yielding at 105 to 110 °C a greenish solution which turns brown under air.

| **Ingredient (in g)** | **Ex 1** | **Ex 2** | **Ex 3** | **Ex 4** | **Ex 5** | **Ex 6** |
|---|---|---|---|---|---|---|
| water | 400 | 350 | 350 | 350 | 350 | 100 |
| caustic soda | 50 | 40 | 100 | 30 | 100 | - |

The solution is adjusted to a determined weight by the addition of water and the obtained solution is filtered (200 microns) to remove remaining solids. The obtained liquid comprises the sulfur dye and shows typical sulfur dye behavior between the reduced (leuco-) form and the oxidized form.

| **(in g)** | **Ex 1** | **Ex 2** | **Ex 3** | **Ex 4** | **Ex 5** | **Ex 6** |
|---|---|---|---|---|---|---|
| adjusted to | 1000 | 750 | 750 | 480 | 880 | 400 |

### Dyeing Examples

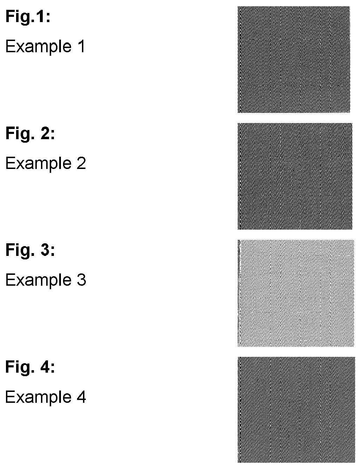

All obtained sulfur dyes **Ex 1** to **Ex 6** were used in a Pad-Steam dyeing process using dextrose (10 g/L) and caustic soda (20 g/L) as reducing agents. **Ex 1** is a deep brown dye with a slightly reddish color. **Ex 2** is a deep brown dye. **Ex 3** results in a pale brown, useful as additive for dyeing mixtures with synergetic properties e.g. for improving blackness of the mixture. **Ex 4** shows a pleasant brown color. The results of the dyeing Examples 1 to 4 are shown in Figures 1 to 4. **Ex 5** possesses a very slight color having about 30 % of the strength of the pure sulfur dye made from pure cotton. **Ex 6** exhibits a quite strong brown coloration.

## Claims

1. A process for manufacturing sulfur dyes from textile material comprising the steps of:
(iv) Mixing the textile material with one or more sulfurization agents selected from the group consisting of sulfur, sulfide, sulfur/caustic soda, polysulfide or a combination thereof;
(v) Heating said mixture.

2. The process as claimed in claim 1 comprising one or more of the following steps prior to step (iv):
(i) Providing textile material; and/or
(ii) Optionally pretreating said textile material in a non-neutral medium and/or with one or more amino or polyamino compounds, at elevated temperatures; and/or
(iii) Optionally neutralizing the pretreated textile material and/or separating the pretreated textile material in form of a presscake.

3. The process as claimed in at least one of claims 1 or 2 comprising step (vi) after step (v):
(vi) Dissolving the mixture obtained in step (v) in aqueous medium and optionally removing undissolved solid particles.

4. The process as claimed in at least one of claims 1 or 3, wherein the textile material is obtained from pre-consumer textiles and/or post-consumer textiles.

5. The process as claimed in at least one of the claims 1 to 4, wherein the textile material is selected from the group consisting of polyamide, acrylic, aramide, polyester, wool, hair, cellulosic fibers as for example cotton, linen, jute, viscose, modal or mixtures thereof.

6. The process as claimed in at least one of the claims 1 to 5, wherein the temperature of the optional pretreatment in step (ii) is in the range of from 40 °C to 200 °C; and/or wherein the duration of the pretreatment in step (ii) is of from 0.5 h to 48 h.

7. The process as claimed in at least one of the claims 1 to 6, wherein in step (ii) the amount by weight between the textile material and the non-neutral medium is from 1 : 15 to 15 : 1.

8. The process as claimed in at least one of the claims 1 to 7, wherein in step (ii) the amino or polyamino compounds are selected from the group consisting of monoalkylamines, monoalkylamino alcohols, ethylenediamine, propylenediamines, butylenediamines, C₅-C₁₈-alkylenediamines, urea, guanidine, dicyandiamide, di(C₁-C₄-alkylene)triamines and tri (C₁-C₄-alkylene)tetramines, or mixtures thereof; and/or wherein in step (ii) the non-neutral medium is a basic aqueous medium which contains a base selected from the group consisting of sodium hydroxide, potassium hydroxide, sodium carbonate, potassium carbonate, ammonia hydroxide, alkane amines such as, monoethanolamine, triethanolamine etc, or mixtures thereof; or
wherein in step (ii) the non-neutral medium is an acidic aqueous medium which contains an acid selected from the group consisting of hydrochloric acid, sulfuric acid, phosphoric acid, nitric acid, formic acid, acetic acid, lactic acid, citric acid and a Lewis acid, or mixtures thereof.

9. The process as claimed in at least one of the claims 1 to 8, wherein the relative amount by weight between the sulfurization agent and the textile material, calculated on dry weight, is between 1:10 to 10: 1.

10. The process as claimed in at least one of the claims 1 to 9, wherein the mixture of step (v) is heated to a temperature in the range of from 120 to 350 °C; and/or wherein the mixture of step (v) is heated for at least 2 h.

11. An aqueous solution of a sulfur dye prepared by the process as claimed in at least one of the claims 1 to 10.

12. The solution as claimed in claim 11 containing free sulfide in an amount of less than 5 % by weight, based on the total weight of the aqueous solution.

13. Use of an aqueous solution as claimed in claims 11 or 12 for dyeing cellulose material or cellulose-containing material.

14. A cellulose material or cellulose-containing material dyed with an aqueous sulfur dye solution as claimed in claims 11 or 12.

15. The cellulose material or cellulose-containing material as claimed in claim 14, which is a cotton textile material, and optionally wherein the cotton textile material is a denim jeans.
